# FASCICULE DE BREVET EUROPEEN

(11) **EP 1 411 711 B1**
(45) Date de publication et mention de la délivrance du brevet: **30.03.2005**
(21) Numéro de dépôt: 03292258.5
(22) Date de dépôt: 12.09.2003
(51) Int. Cl.: H04M 3/42, H04M 1/723, H04M 1/247, H04M 1/663, H04Q 3/00

(54) **Système et procédé d'adressage de communication sur un réseau téléphonique commuté**
System und Verfahren für die Adressierung einer Kommunikation in einem geschalteten Netzwerk
System and method for addressing a communication over the switched network

(30) Priorité: 17.10.2002 FR 0212940
(43) Date de publication de la demande: 21.04.2004
(73) Titulaire: FRANCE TELECOM, 75015 Paris (FR)
(72) Inventeur: Lottin, Philippe, 22560 Trebeurden (FR); Guillot, Yvon, 22560 Trebeurden (FR)
(74) Mandataire: Habasque, Etienne Joel Jean-François

(56) Documents cités:
- US-B1- 6 408 177

## Description

La présente invention concerne un système et un procédé d'adressage de communications sur un réseau téléphonique commuté.

Dans le système actuel, il existe des appareils téléphoniques comportant des moyens de communication par messages écrits courts communément désignés SMS, ainsi que des serveurs d'adressage adaptés pour transmettre de tels messages sur le réseau téléphonique commuté.

Des messages écrits courts peuvent ainsi être reçus et émis sur ou à partir d'appareils téléphoniques adaptés reliés au réseau téléphonique commuté en transmettant ces messages dans la bande passante dédiée aux communications vocales.

Les systèmes et procédés existants permettent également d'adresser un message SMS à un appareil téléphonique sélectionné parmi une pluralité d'appareils téléphoniques reliés à une même ligne téléphonique et donc adressables grâce au même numéro d'abonné.

Par exemple, un message écrit court est reçu par un serveur d'adressage qui identifie le destinataire, et insert dans des trames de données de signalisation d'appel, un identifiant destiné à être reconnu par l'appareil téléphonique destinataire.

L'ensemble comprenant le corps du message SMS et l'identifiant est ensuite transmis dans la bande passante destinée aux communications vocales du réseau téléphonique commuté, à destination d'une pluralité d'appareils téléphoniques connectés à une ligne téléphonique et adressables par un même numéro d'abonné.

Tous les appareils téléphoniques reçoivent le message transmis. Cependant, seul l'appareil téléphonique reconnaissant l'identifiant transmis simultanément au message SMS, traite ce message en avertissant l'utilisateur de sa réception et en permettant sa lecture.

De tels systèmes et procédés sont décrits notamment dans la norme de télécommunication ETSI ES 201 912, publiée en janvier 2001.

Cependant, ces systèmes et procédés d'adressage sont limités dans leurs applications à la seule communication par des messages écrits courts.

D'autre part, il existe un système permettant la gestion d'un appel par un utilisateur nomade avec la possibilité de choisir différentes options pour la gestion de l'appel entrant, utilisant des messages courts (SMS) dans un réseau de communication mobile. Ce système utilise le canal de signalisation pour l'acheminement du message court et ne permet pas l'adressage de différents appareils telephoniques. Un tel système est décrit dans la publication de brevet US 6.408.177.

Le but de la présente invention est de remédier à ce problème en décrivant un procédé et un système d'adressage de communications aux fonctionnalités accrues.

La présente invention a pour objet un système d'adressage de communications sur un réseau téléphonique commuté comportant :
- au moins un appareil téléphonique, relié audit réseau commuté, associé à des moyens de communication par messages écrits courts et comportant des moyens d'alerte d'un utilisateur lors de la réception d'une communication ; et
- un serveur d'adressage de communications comportant des moyens automatiques de transmission de messages écrits courts vers un ou plusieurs appareils téléphoniques sélectionnés, dans une bande passante dédiée aux communications vocales dudit réseau téléphonique commuté,
ledit serveur comportant en outre :
- des moyens de réception d'appels vocaux provenant d'un téléphone appelant au travers au moins dudit réseau téléphonique commuté ;
- des moyens de génération d'au moins un message écrit court contenant des instructions de commande, destiné à être transmis au ou à chaque appareil téléphonique sélectionné, en réponse à la réception d'un appel vocal provenant dudit téléphone appelant ; et
- des moyens d'aboutement de communications vocales,
et le système comportant, associé au ou à chaque appareil téléphonique ;
- des moyens de pilotage de son fonctionnement, commandables à distance par les instructions contenues dans le message écrit court de commande, lesdites instructions permettant au moins de déclencher le fonctionnement desdits moyens d'alerte d'un utilisateur ; et
- des moyens de transmission d'un signal de disponibilité dudit appareil à destination dudit serveur, lorsque ledit appareil est disponible pour une communication vocale,
et ledit serveur étant adapté pour l'aboutement dudit appel vocal entre ledit téléphone appelant et ledit appareil, par lesdits moyens d'aboutement dudit serveur pour l'établissement d'une communication vocale suite à la réception dudit signal de disponibilité.

Suivant d'autres caractéristiques :
- il comporte une pluralité d'appareils téléphoniques reliés à une même ligne téléphonique dudit réseau téléphonique commuté et adressables grâce à un même numéro d'abonné, tout ou partie desdits appareils téléphoniques comportant des moyens de pilotage de leur fonctionnement commandables à distance et des moyens de transmission d'un signal de disponibilité ;
- il comporte une pluralité d'appareils téléphoniques connectés au travers d'un équipement central à une même ligne téléphonique dudit réseau téléphonique commuté et adressables grâce à un même numéro d'abonné, ledit équipement central comportant lesdits moyens de communication par messages écrits courts, lesdits moyens de pilotage du fonctionnement commandables et lesdits moyens de transmission d'un signal de disponibilité ;
- lesdits moyens de génération de messages écrits courts de commande sont adaptés pour identifier automatiquement un appareil téléphonique ou groupe d'appareils sélectionnés parmi ladite pluralité, en fonction du numéro d'abonné appelé par le téléphone appelant et émettre au moins un message écrit court contenant un identifiant destiné à être reconnu par cet appareil téléphonique ou ce groupe d'appareils ;
- il comporte une pluralité d'appareils téléphoniques reliés à des lignes téléphoniques distinctes dudit réseau téléphonique commuté, adressables grâce à des numéros d'abonnés distincts ;
- ledit serveur comporte en outre au moins une liste d'appareils téléphoniques ou de groupes d'appareils téléphoniques et lesdits moyens de génération de messages écrits courts de commande sont adaptés pour adresser successivement à chacun desdits appareils téléphoniques ou groupes d'appareils téléphoniques d'une même liste, un message de commande en cas d'absence de signal de disponibilité renvoyé par l'appareil téléphonique ou le groupe d'appareils téléphoniques précédent dans ladite liste ;
- il comporte en outre des moyens d'identification de l'utilisateur dudit ou d'un appareil téléphonique sélectionné, et lesdits moyens d'aboutement de communications vocales sont adaptés pour être inhibés en cas d'identification négative ;
- lesdits moyens d'identification d'un utilisateur sont formés dans ledit serveur ;
- ledit serveur comporte un serveur vocal formant interface homme-machine, adapté pour être mis en oeuvre lors de la réception d'appels vocaux par ledit serveur ;
- il comporte en outre un équipement de routage adapté pour identifier un appel entrant et router cet appel entrant vers ledit serveur.

L'invention a également pour objet un procédé d'adressage de communications sur un réseau téléphonique commuté comportant une étape d'émission d'au moins un message écrit court par un serveur d'adressage à destination d'un appareil téléphonique ou d'un groupe d'appareils téléphoniques sélectionné, dans une bande passante dédiée aux communications vocales dudit réseau téléphonique commuté, ladite étape d'émission d'un message écrit court étant conséquente à une étape d'établissement d'une communication vocale entre un téléphone appelant et ledit serveur d'adressage de communications, le ou lesdits messages écrits courts contenant des instructions de commande au moins du déclenchement du fonctionnement de moyens d'alerte d'un utilisateur contenu dans le ou chaque appareil téléphonique sélectionné et le procédé comportant, suite la ladite étape d'émission d'au moins un message écrit court :
- une étape de renvoi d'un signal de disponibilité par ledit appareil téléphonique sélectionné à destination dudit serveur d'adressage, lorsque ledit appareil téléphonique est disponible pour une communication vocale ; et
- une étape d'aboutement de la communication vocale entre ledit téléphone appelant et ledit serveur d'adressage, avec ledit appareil téléphonique sélectionné pour permettre l'établissement d'une communication vocale entre ledit téléphone appelant et ledit appareil téléphonique sélectionné

Selon d'autres caractéristiques du procédé de l'invention, il comprend en outre une étape d'identification d'un utilisateur dudit appareil téléphonique sélectionné, conditionnant la réalisation de ladite étape d'aboutement de la communication vocale.

L'invention sera mieux comprise à la lecture de la description qui va suivre, donnée uniquement à titre d'exemple et faite en se référant aux dessins annexés, sur lesquels :
- la Fig.1 représente un schéma d'un premier mode de réalisation d'un système selon l'invention ;
- la Fig.2 représente un organigramme d'un procédé d'adressage de communications selon l'invention ; et
- la Fig.3 représente un schéma d'un second mode de réalisation d'un système selon l'invention.

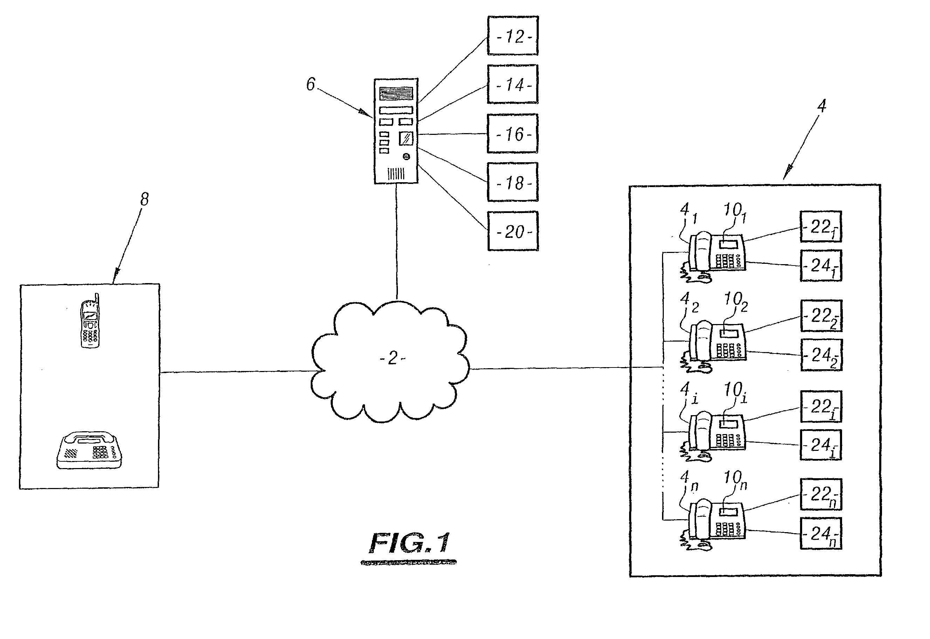

Le système décrit en référence à la figure 1 comporte un réseau téléphonique commuté auquel est raccordée une pluralité 4 d'appareils téléphoniques 4₁ à 4ₙ ainsi qu'un serveur d'adressage 6 et un téléphone appelant 8, tel qu'un téléphone directement raccordé au réseau commuté 2 ou encore un téléphone mobile raccordé au réseau commuté 2 par l'intermédiaire d'équipements de routage adaptés.

De manière classique, chaque appareil téléphonique 4₁ à 4ₙ comporte des moyens 10₁ à 10ₙ de communication par messages écrits courts, couramment désignés messages SMS.

De tels moyens 10₁ à 10ₙ sont par exemple composés d'un écran d'affichage de messages, de moyens de saisie d'un message par un utilisateur et des moyens de codage et de décodage de ces messages afin de les émettre et les recevoir vers et à partir du réseau téléphonique commuté 2, en utilisant la bande passante dédiée aux communications vocales.

Les appareils téléphoniques 4₁ à 4ₙ comportent également des moyens d'alerte d'un utilisateur lors de la réception d'une communication, formés de manière classique de moyens d'alerte auditifs et/ou sonores.

En outre, le serveur d'adressage 6 comporte des moyens 12 automatiques de transmission de messages SMS réalisés de manière classique.

Avantageusement, ces moyens 12 de transmission de messages SMS permettent d'adresser des messages SMS à un appareil téléphonique 4ᵢ sélectionné dans ladite pluralité 4 d'appareils téléphoniques.

Par exemple, ces moyens 12 automatiques de transmission sont adaptés pour recevoir un message SMS émis par le téléphone appelant 8, directement sur le réseau commuté 2 ou encore provenant d'un réseau de téléphonie mobile, puis coder ce message SMS afin de le retransmettre sur le réseau commuté 2 dans la bande passante dédiée aux communications vocales, tout en insérant dans les données de signalisation d'appel, un identificateur unique destiné à être reconnu par l'appareil téléphonique 4ᵢ destinataire.

Selon l'invention, le serveur d'adressage 6 comporte des moyens 14 de réception d'appels vocaux formés par exemple d'un serveur vocal, des moyens 16 de génération de messages SMS contenant des instructions de commande, et désignés SMS de commande, à destination des appareils téléphoniques 4₁ à 4ₙ accessibles au travers du réseau commuté 2, et des moyens 18 d'aboutement de communications vocales.

Avantageusement, le serveur d'adressage 6 comporte également des moyens 20 d'identification des utilisateurs formés de manière classique d'une base de données comportant par exemple des couples formés d'un identifiant d'utilisateur associé à un code numérique.

En variante, les moyens d'identification d'un utilisateur sont formés dans tout ou partie de la pluralité 4 d'appareils téléphoniques.

En outre, dans le système de l'invention, les appareils téléphoniques 4₁ à 4ₙ comportent chacun des moyens 22₁ à 22ₙ de pilotage de leur fonctionnement, commandables à distance par les instructions des messages SMS de commande ainsi que des moyens 24₁ à 24ₙ de transmission d'un signal de disponibilité lorsque l'appareil téléphonique correspondant est disponible pour l'établissement d'une communication vocale.

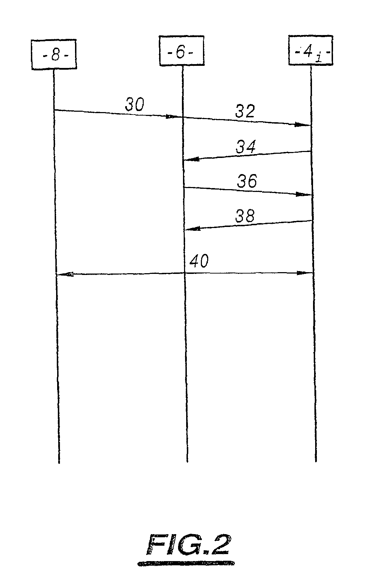

En référence à la figure 2, on va maintenant décrire le fonctionnement d'un tel système.

Lors d'une étape 30, un appel vocal est émis du téléphone appelant 8 vers le serveur d'adressage 6.

Cet appel est réalisé de manière classique par la composition d'un numéro de téléphone à partir du téléphone appelant 8, lequel numéro de téléphone correspond directement au serveur d'adressage 6 et comporte une information d'identification d'un appareil téléphonique donné 4ᵢ parmi la pluralité 4.

Par exemple, le numéro de téléphone composé correspond à un numéro de téléphone dit virtuel, dans lequel les derniers chiffres forment un suffixe d'identification de l'appareil téléphonique donné 4ᵢ.

Cet appel est reçu par le serveur vocal 14 qui diffuse par exemple un message vocal d'attente à l'intention de l'utilisateur du téléphone appelant 8.

Lors de la réception de cet appel, les moyens 12 de transmission de messages SMS identifient de manière classique l'appareil téléphonique 4ᵢ sélectionné destinataire de l'appel, par la reconnaissance du numéro appelé et notamment de l'information d'identification contenue dans celui-ci.

Les moyens 16 de génération des SMS de commande, émettent alors lors d'une étape 32, un SMS contenant des instructions de commande à l'intention du téléphone sélectionné 4ᵢ.

Ce SMS de commande est généré localement dans le serveur 6 et contient au moins des instructions de déclenchement des moyens d'alerte d'un utilisateur ainsi qu'un identifiant destiné à être reconnu par l'appareil téléphonique sélectionné 4ᵢ. Il est transmis au travers du réseau commuté 2 sur la bande passante dédiée aux communications vocales et est reçu par tous les appareils téléphoniques 4₁ à 4ₙ de la pluralité 4.

Lors de la réception de ce SMS de commande, les moyens 10ᵢ de communication par SMS de l'appareil téléphonique 4ᵢ reconnaissent l'identifiant transmis, s'identifient en tant que destinataire de ce message, et le traitent.

Les moyens 22ᵢ de pilotage sont commandés par les instructions contenues dans ce message SMS de commande et déclenchent le fonctionnement des moyens d'alerte d'un utilisateur.

Ainsi, seul le téléphone 4ᵢ, parmi la pluralité 4 d'appareils téléphoniques, déclenche le fonctionnement de ses moyens d'alerte d'un utilisateur.

Bien entendu, il est également possible d'adresser simultanément un groupe d'appareils téléphoniques selon un procédé similaire en insérant plusieurs identifiants dans la signalisation d'appel ou encore un identifiant commun destiné à être reconnu par un groupe formé de plusieurs appareils téléphoniques.

Eventuellement, des appareils téléphoniques d'un même groupe et donc destinés à être adressés simultanément, peuvent être reliés à des lignes téléphoniques distinctes.

Dans ce cas, le serveur 6 est adapté pour émettre simultanément un SMS de commande sur chacune des lignes téléphoniques.

Un utilisateur a alors la possibilité de décrocher le combiné du téléphone 4ᵢ. Ce faisant, il indique la disponibilité du téléphone 4ᵢ pour l'établissement d'une communication vocale, de sorte que les moyens 24ᵢ transmettent lors d'une étape 34, un signal de disponibilité au serveur 6.

Par exemple, ce signal de disponibilité est retourné sous la forme d'un message SMS transmis sur la bande passante dédiée aux communications vocales du réseau commuté 2 ou encore, sous la forme de signaux multifréquences dits « DTMF ».

Dans le mode de réalisation décrit, le serveur 6 comporte des moyens d'identification d'un utilisateur, de sorte qu'à la réception du signal de disponibilité, les moyens d'identification 20 émettent une requête d'identification à l'intention du téléphone 4ᵢ lors d'une étape 36.

L'utilisateur du téléphone 4ᵢ doit alors s'identifier par exemple par la saisie d'un code numérique à l'aide des touches multifonctions DTMF ou encore par une empreinte vocale ou tout autre procédé équivalent d'identification d'un utilisateur.

L'identification est renvoyée par le téléphone 4ᵢ au serveur 6 lors d'une étape 38.

L'identification conditionne la réalisation de l'aboutement d'une communication vocale de sorte que, dans le cas où elle est négative, l'aboutement de la communication vocale est inhibé et les communications sont interrompues.

Dans le cas où l'identification est positive, les moyens 18 d'aboutement réalisent un aboutement entre l'appel provenant du téléphone appelant 8 et l'appareil téléphonique 4ᵢ sélectionné, afin de permettre l'établissement d'une communication vocale 40 entre le téléphone appelant 8 et l'appareil téléphonique 4ᵢ sélectionné.

Cet aboutement est réalisé par la connexion des canaux de communication sur la bande vocale du réseau commuté 2 établis d'une part, entre le téléphone appelant 8 et le serveur 6 et d'autre part, entre l'appareil téléphonique 4ᵢ sélectionné et le serveur 6.

Dans le cas où un groupe d'appareils téléphoniques est adressé, la communication vocale est aboutée avec le premier appareil qui renvoie un signal de disponibilité, après identification de l'utilisateur.

Il apparaît donc que le système et le procédé de l'invention permettent d'exploiter les fonctionnalités liées aux systèmes et procédés d'adressage de communications par messages écrits courts sur un réseau téléphonique commuté, pour permettre l'établissement de communications vocales.

En outre, le système et le procédé de l'invention permettent, par la reconnaissance du numéro appelé, l'établissement d'une communication vocale avec un appareil téléphonique sélectionné parmi une pluralité 4 d'appareils téléphoniques, tous reliés à une même ligne téléphonique et adressables grâce au même numéro d'abonné, afin de s'assurer que seul l'appareil téléphonique sélectionné ou le groupe d'appareils sélectionnés met en oeuvre ses moyens d'alerte d'un utilisateur.

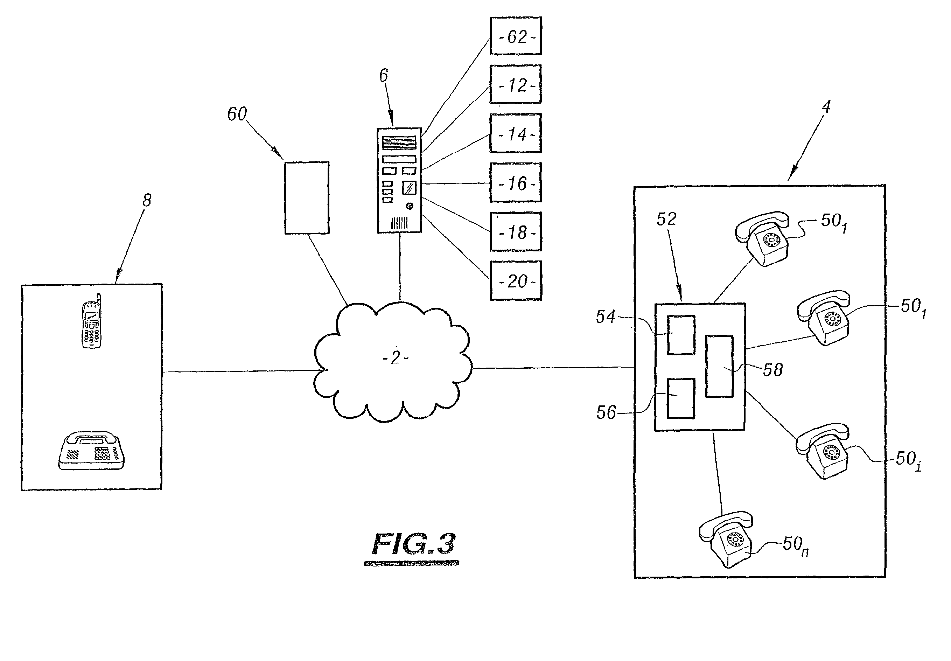

Sur la figure 3, on a représenté un second mode de réalisation d'un système selon l'invention.

Dans ce mode de réalisation, la pluralité d'appareils téléphoniques 4 reliés à une même ligne téléphonique et adressables grâce au même numéro d'abonné, comporte des appareils téléphoniques 50₁ à 50ₙ adaptés essentiellement pour la communication vocale et notamment ne comportant pas de moyens spécifiques de communication par messages SMS.

Dans ce mode de réalisation, les appareils téléphoniques 50₁ à 50ₙ, sont connectés au réseau téléphonique commuté 2 au travers d'un équipement central 52 comportant des moyens 54 de communication par messages SMS, des moyens 56 de pilotage du fonctionnement des appareils téléphoniques 50₁ à 50ₙ, commandables à distance et des moyens 58 de transmission d'un signal de disponibilité.

En outre, dans ce mode de réalisation, le système comporte également un équipement 60 de routage relié au réseau commuté 2 et le serveur d'adressage 6 comporte une liste 62 d'appareils téléphoniques ou de groupes d'appareils téléphoniques à adresser de manière séquentielle et correspondant à un même utilisateur.

Par exemple, une telle liste permet de définir pour un utilisateur donné, une séquence d'appareils téléphoniques et/ou de groupes d'appareils à adresser successivement et correspondant par exemple à diverses localisations géographiques telles que bureau, laboratoire, salle de réunion, secrétariat, messagerie vocale.

Lorsqu'un appel est émis par le téléphone appelant 8 à destination du numéro d'abonné permettant l'adressage de la pluralité d'appareils téléphoniques 4, l'équipement de routage 60 détecte cet appel entrant et l'identifie afin de le router directement vers le serveur d'adressage 6.

Bien entendu, il est possible de configurer cet équipement de routage 60 pour permettre le routage automatique de l'appel vers le serveur 6 ou directement vers la pluralité 4 correspondant dans ce cas à un appel classique et entraîne le déclenchement des moyens d'alerte de tous les appareils téléphoniques.

Un tel aiguillage peut être réalisé par exemple en fonction du numéro appelé ou encore de manière classique, en fonction du numéro appelant.

Lors de la réception de l'appel entrant, le serveur vocal 14 interroge alors l'utilisateur du téléphone appelant 8 afin de déterminer un utilisateur destinataire donné parmi une pluralité d'utilisateurs, par exemple par des séries de questions vocales à réponses binaires.

En variante, le serveur vocal 14 est intégré dans l'équipement de routage 60 qui, après identification du correspondant souhaité, émet, à l'attention du serveur d'adressage 6, un appel contenant l'identifiant de l'utilisateur sélectionné.

Cette détermination étant effectuée les moyens 16 de génération de SMS de commande interrogent la liste 62 correspondant à l'utilisateur déterminé, afin d'obtenir la séquence d'appareils téléphoniques et/ou de groupe d'appareils à adresser.

Les moyens 16 de génération de SMS de commande génèrent alors un SMS de commande à l'attention du premier appareil téléphonique 50ᵢ de la liste 62.

De même que précédemment, les moyens 12 automatiques de transmission transmettent ce SMS de commande sur le réseau téléphonique commuté 2, dans la bande passante dédiée aux communications vocales, vers la pluralité d'appareils téléphoniques 4.

Dans le mode de réalisation décrit, ce SMS de commande est reçu par l'équipement central 52 et est traité par les moyens de communication par SMS 54. Ces moyens 54 identifient l'appareil téléphonique sélectionné 50ᵢ et les moyens 56 de pilotage du fonctionnement commandable à distance déclenchent le fonctionnement des moyens d'alerte d'un utilisateur de cet appareil téléphonique 50ᵢ.

Dans le cas où un utilisateur est à proximité et décroche le combiné de l'appareil téléphonique 50ᵢ, les moyens 58 de transmission d'un signal de disponibilité, envoient au serveur 6, un signal indiquant la disponibilité de l'appareil téléphonique 50 pour une communication vocale.

De même que précédemment, l'utilisateur de l'appareil téléphonique 50ᵢ est alors amené à s'identifier, et si l'identification est vérifiée, les moyens d'aboutement 18 du serveur 6 réalisent la mise en communication vocale du téléphone appelant 8 avec l'appareil téléphonique 50ᵢ.

Dans le cas où aucun utilisateur n'est à proximité de l'appareil téléphonique 50ᵢ, aucun signal de disponibilité n'est retourné au serveur 6, de sorte qu'au bout d'un temps donné, les moyens 16 de génération de SMS de commande du serveur 6, adressent un nouvel SMS de commande à l'appareil téléphonique ou au groupe d'appareils téléphoniques suivant sur la liste 62.

Le procédé est alors répété avec ce nouvel appareil téléphonique ou groupe d'appareils.

Ainsi, un utilisateur a possibilité de tenter de joindre un correspondant en suivant une liste définie par celui-ci ou par un tiers et en appelant successivement chacun des appareils téléphoniques ou groupes d'appareils de cette liste.

Eventuellement, certains des appareils d'une même liste et/ou d'u même groupe, peuvent être en des endroits géographiques différents, être reliés à des lignes téléphoniques distinctes et être adressables par des numéros d'abonnés distincts.

Bien entendu, de manière classique, une ligne téléphonique donnée peut être reliée à un unique appareil téléphonique ou à une pluralité ainsi que cela a été décrit précédemment.

Il apparaît donc que le système et le procédé de l'invention permettent d'accroître sensiblement les fonctions liées aux systèmes de communication par messages écrits courts sur des réseaux téléphoniques commutés.

Bien entendu, des combinaisons des modes de réalisation décrits ainsi que l'utilisation simultanée d'équipements classiques peuvent également être réalisés.

## Revendications

1. Système d'adressage de communications sur un réseau téléphonique commuté (2) comportant :
- au moins un appareil téléphonique (4ᵢ), relié audit réseau commuté (2), associé à des moyens (10 ; 54) de communication par messages écrits courts (SMS) et comportant des moyens d'alerte d'un utilisateur lors de la réception d'une communication ; et
- un serveur (6) d'adressage de communications comportant des moyens (12) automatiques de transmission de messages écrits courts vers un ou plusieurs appareils téléphoniques sélectionnés (4ᵢ), dans une bande passante dédiée aux communications vocales dudit réseau téléphonique commuté (2),
**caractérisé en ce que** ledit serveur (6) comporte en outre :
- des moyens (14) de réception d'appels vocaux provenant d'un téléphone appelant (8) au travers au moins dudit réseau téléphonique commuté (6);
- des moyens (16) de génération d'au moins un message écrit court contenant des instructions de commande, destiné à être transmis au ou à chaque appareil téléphonique sélectionné, en réponse à la réception d'un appel vocal provenant dudit téléphone appelant (8) ; et
- des moyens (18) d'aboutement de communications vocales,
**en ce qu'**il comporte, associé au ou à chaque appareil téléphonique (4ᵢ) :
- des moyens (22ᵢ ; 56) de pilotage de son fonctionnement, commandables à distance par les instructions contenues dans le message écrit court de commande, lesdites instructions permettant au moins de déclencher le fonctionnement desdits moyens d'alerte d'un utilisateur ; et
- des moyens (24ᵢ ; 38) de transmission d'un signal de disponibilité dudit appareil (4ᵢ) à destination dudit serveur (6), lorsque ledit appareil (4ᵢ) est disponible pour une communication vocale,
et **en ce que** ledit serveur (6) est adapté pour l'aboutement dudit appel vocal entre ledit téléphone appelant (8) et ledit appareil (4ᵢ), par lesdits moyens (18) d'aboutement dudit serveur (6) pour l'établissement d'une communication vocale suite à la réception dudit signal de disponibilité.

2. Système selon la revendication 1, **caractérisé en ce qu'**il comporte une pluralité (4) d'appareils téléphoniques (4₁ à 4ₙ) reliés à une même ligne téléphonique dudit réseau téléphonique commuté (2) et adressages grâce à un même numéro d'abonné, tout ou partie desdits appareils téléphoniques (4ᵢ) comportant des moyens (22ᵢ) de pilotage de leur fonctionnement commandables à distance et des moyens (24ᵢ) de transmission d'un signal de disponibilité.

3. Système selon l'une quelconque des revendications 1 ou 2, **caractérisé en ce qu'**il comporte une pluralité (4) d'appareils téléphoniques connectés au travers d'un équipement central (52) à une même ligne téléphonique dudit réseau téléphonique commuté (2), et adressables grâce à un même numéro d'abonné, ledit équipement central (52) comportant lesdits moyens (54) de communication par messages écrits courts, lesdits moyens (56) de pilotage du fonctionnement commandables et lesdits moyens (58) de transmission d'un signal de disponibilité.

4. Système selon l'une quelconque des revendications 2 ou 3, **caractérisé en ce que** lesdits moyens (16) de génération de messages écrits courts de commande sont adaptés pour identifier automatiquement un appareil téléphonique (41) ou groupe d'appareils sélectionnés parmi ladite pluralité (4), en fonction du numéro d'abonné appelé par le téléphone appelant (8) et émettre au moins un message écrit court contenant un identifiant destiné à être reconnu par cet appareil téléphonique (4ᵢ) ou ce groupe d'appareils.

5. Système selon l'une quelconque des revendications 1 à 4, **caractérisé en ce qu'**il comporte une pluralité d'appareils téléphoniques reliés à des lignes téléphoniques distinctes dudit réseau téléphonique commuté (2), adressables grâce à des numéros d'abonnés distincts.

6. Système selon l'une quelconque des revendications 1 à 5, **caractérisé en ce que** ledit serveur (6) comporte en outre au moins une liste (62) d'appareils téléphoniques (4ᵢ) ou de groupes d'appareils téléphoniques et **en ce que** lesdits moyens (18) de génération de messages écrits courts de commande sont adaptés pour adresser successivement à chacun desdits appareils téléphoniques ou groupes d'appareils téléphoniques d'une même liste (68), un message de commande en cas d'absence de signal de disponibilité renvoyé par l'appareil téléphonique ou le groupe d'appareils téléphoniques précédent de ladite liste.

7. Système selon l'une quelconque des revendications 1 à 6, **caractérisé en ce qu'**il comporte en outre des moyens (20) d'identification de l'utilisateur dudit ou d'un appareil téléphonique (4ᵢ) sélectionné, et **en ce que** lesdits moyens (18) d'aboutement de communications vocales sont adaptés pour être inhibés en cas d'identification négative.

8. Système selon la revendication 7, **caractérisé en ce que** lesdits moyens (20) d'identification d'un utilisateur sont formés dans ledit serveur (6).

9. Système selon l'une quelconque des revendications 1 à 8, **caractérisé en ce que** ledit serveur (6) comporte un serveur vocal (14) formant interface homme-machine, adapté pour être mis en oeuvre lors de la réception d'appels vocaux par ledit serveur (6).

10. Système selon l'une quelconque des revendications 1 à 9, **caractérisé en ce qu'**il comporte en outre un équipement (60) de routage adapté pour identifier un appel entrant et router cet appel entrant vers ledit serveur (6).

11. Procédé d'adressage de communications sur un réseau téléphonique commuté (2) comportant une étape (32) d'émission d'au moins un message écrit court par un serveur d'adressage (6) à destination d'un appareil téléphonique (4ᵢ) ou d'un groupe d'appareils téléphoniques sélectionnés, dans une bande passante dédiée aux communications vocales dudit réseau téléphonique commuté (2), **caractérisé en ce que** ladite étape (32) d'émission d'un message écrit court est conséquente à une étape (30) d'établissement d'une communication vocale entre un téléphone appelant (8) et ledit serveur d'adressage de communications (6), le ou lesdits messages écrits courts contenant des instructions de commande au moins du déclenchement du fonctionnement de moyens d'alerte d'un utilisateur contenus dans le ou chaque appareil téléphonique sélectionné et **en ce que** le procédé comporte, suite à la ladite étape (32) d'émission d'au moins un message écrit court :
- une étape (34) de renvoi d'un signal de disponibilité par ledit appareil téléphonique sélectionné (4ᵢ) à destination dudit serveur d'adressage (6), lorsque ledit appareil téléphonique (4ᵢ) est disponible pour une communication vocale ; et
- une étape (40) d'aboutement de la communication vocale entre ledit téléphone appelant (8) et ledit appareil téléphonique sélectionné (4ᵢ) via ledit serveur d'adressage (6) pour permettre l'établissement d'une communication vocale entre ledit téléphone appelant (8) et ledit appareil téléphonique sélectionné (4ᵢ).

12. Procédé selon la revendication 11, **caractérisé en ce qu'**il comprend en outre une étape (36, 38) d'identification d'un utilisateur dudit appareil téléphonique sélectionné (4ᵢ), conditionnant la réalisation de ladite étape (40) d'aboutement de la communication vocale.

## Patentansprüche

1. System für die Adressierung einer Kommunikation in einem geschalteten Netzwerk (2), das folgendes enthält:
- mindestens einen Telephonapparat (4ᵢ), welcher an dieses geschaltete Netzwerk (2) angeschlossen und mit Mitteln für die Kommunikation von kurzen schriftlichen Mitteilungen (SMS) verbunden ist, und Mittel für die Benachrichtigung des Benutzers beim Erhalt einer Mitteilung aufweist; und
- einen Server (6) für die Adressierung von Kommunikationen, welcher automatische Mittel (12) für die Übertragung von kurzen schriftlichen Mitteilungen an einen oder mehrere ausgewählte Telephonapparate (4ᵢ) in einem Durchlassbereich enthält, welcher für die Übermittlung von mündlichen Mitteilungen in dem geschalteten Telephonnetz (2) bestimmt ist,
**dadurch gekennzeichnet, dass**
dieser Server (6) außerdem folgendes enthält:
- Mittel (14) für den Empfang von Sprechverbindungen von einem anrufenden Telephon (8) über mindestens dieses geschaltete Telephonnetz (2);
- sowie Mittel (16) für die Erzeugung von mindestens einer kurzen schriftlichen Mitteilung, welche Instruktionen für die Steuerung enthält, und die dafür bestimmt sind, an den oder die ausgewählten Telephonapparate als Reaktion auf einen mündlichen Anruf von dem anrufenden Telephonapparat (8) übertragen zu werden; und
- Mittel (18) für das Zusammenfügen von Sprechverbindungen,
und dadurch, dass dieses System in Verbindung mit den einzelnen Telephonapparaten (4ᵢ) folgendes aufweist:
- Mittel (22₁; 56) für die Steuerung seiner Funktion, die mit Hilfe von Instruktionen ferngesteuert werden kann, die in der kurzen schriftlichen Mitteilung für die Steuerung enthalten sind, wobei es diese Instruktionen erlauben, mindestens die Funktion der Mittel für die Benachrichtigung eines Benutzers auszulösen; und
- Mittel (24j; 38) für die Übertragung eines Signals der Bereitschaft dieses Telephonapparates (4i) in Richtung des Servers (6), wenn dieser Telephonapparat für eine Sprechverbindung bereit ist,
und dadurch, dass der Server (6) für das Zusammenfügen dieser Sprechverbindungen zwischen dem anrufenden Teiephonapparat (8) und diesem Telephonapparat (4ᵢ) mit Hilfe der Mittel (18) für das Zusammenfügen des Servers (6) ausgelegt ist, um eine Sprechverbindung nach dem Erhalt des Signals für die Bereitschaft herzustellen.

2. System nach Anspruch 1,
**dadurch gekennzeichnet, dass**
es eine Vielzahl (4) von Telephonapparaten (4₁ bis 4ₙ) enthält, die an dieselbe Telephonleitung des geschalteten Telephonnetzes (2) angeschlossen sind, und die mit Hilfe derselben Telephonnummer angewählt werden können, und alle Telephonapparate oder ein Teil dieser Telephonapparate (4ᵢ) Mittel (22ᵢ) für die Steuerung ihrer Funktion ferngesteuert werden, sowie Mittel (24ᵢ) für die Übertragung eines Signals der Bereitschaft aufweist.

3. System nach einem der Ansprüche 1 oder 2,
**dadurch gekennzeichnet, dass**
es eine Vielzahl (4) von Telephonapparaten enthält, die mit Hilfe einer zentralen Vorrichtung (52) an dieselbe Telephonleitung des geschalteten Telephonnetzes (2) angeschlossen sind und mit Hilfe derselben Teilnehmernummer angewählt werden können, und diese zentrale Vorrichtung die Mittel (54) für die Übermittlung von kurzen schriftlichen Mitteilungen enthält, sowie die Mittel (56) für die Steuerung der ferngesteuerten Funktion und die Mittel (58) für die Übertragung eines Signals für die Bereitschaft aufweist.

4. System nach einem der Ansprüche 2 oder 3,
**dadurch gekennzeichnet, dass**
die Mittel (16) für die Erzeugung von ferngesteuerten kurzen schriftlichen Mitteilungen so ausgelegt sind, dass sie automatisch einen Telephonapparat (41) aus der Gruppe von Telephonapparaten, die aus der Vielzahl (4) von Telephonapparaten besteht, je nach der von dem anrufenden Telephonapparat (8) adressierten Teilnehmernummer angewählt worden ist, um mindestens eine kurze schriftliche Mitteilung auszusenden, welche einen Identifikator enthält, der von diesem Telephonapparat (4ᵢ) oder der Gruppe von Telephonapparaten erkannt werden kann.

5. System nach einem der Ansprüche 1 bis 4,
**dadurch gekennzeichnet, dass**
es eine Vielzahl von Telephonapparaten enthält, die an getrennte Telephonleitungen des geschalteten Telephonnetzes (2) angeschlossen sind, . die mit Hilfe von bestimmten Teilnehmernummern angewählt werden können.

6. System nach einem der Ansprüche 1 bis 5,
**dadurch gekennzeichnet, dass**
der Server (6) außerdem mindestens eine Liste (62) von Telephonapparaten (4i) oder von Gruppen von Telephonapparaten enthält, und dadurch, dass die Mittel (18) für die Erzeugung von ferngesteuerten kurzen schriftlichen Mitteilungen so ausgelegt sind, dass sie sukzessive an jeden einzelnen Telephonapparat oder an die Gruppe von Telephonapparaten derselben Liste (68) eine ferngesteuerte Nachricht bei Fehlen eines Signals der Bereitschaft senden können, das von dem vorher in der Liste genannten Telephonapparat oder der Gruppe von Telephonapparaten zurückgesendet wird.

7. System nach einem der Ansprüche 1 bis 6,
**dadurch gekennzeichnet, dass**
es außerdem Mittel (20) für die Identifizierung des Benutzers des ausgewählten Telephonapparates (4ᵢ) enthält, und dadurch, dass diese Mittel (18) für das Zusammenfügen von Sprechverbindungen so ausgelegt sind, dass sie bei einer negativen Identifikation unterdrückt werden können.

8. System nach Anspruch 7,
**dadurch gekennzeichnet, dass**
die Mittel (20) für die Identifizierung eines Benutzers in dem Server (6) ausgebildet sind.

9. System nach einem der Ansprüche 1 bis 8,
**dadurch gekennzeichnet, dass**
der Server (6) einen vokalen Server (14) enthält, welcher die Schnittstelle zwischen Mensch und Maschine bildet, und so ausgelegt ist, dass er beim Empfang von Sprechverbindungen durch den Server (6) eingesetzt werden kann.

10. System nach einem der Ansprüche 1 bis 9,
**dadurch gekennzeichnet, dass**
es außerdem eine Vorrichtung (60) für die Leitweglenkung enthält, die so ausgelegt ist, dass sie einen eingehenden Anruf identifizieren und diesen Anruf an den Server (6) weiterleiten kann.

11. Verfahren für die Adressierung einer Kommunikation in einem geschalteten Netzwerk (2), welches eine Etappe (32) für die Aussendung von mindestens einer kurzen schriftlichen Nachricht durch einen Server (6) für die Adressierung an einen Telephonapparat (4ᵢ) oder eine Gruppe von ausgewählten Telephonapparaten in einem Durchlassbereich umfasst, welcher für Sprechverbindungen in dem geschalteten Telephonnetzes (2) bestimmt ist,
**dadurch gekennzeichnet, dass**
diese Etappe (32) für die Aussendung einer kurzen schriftlichen Mitteilung einer Etagpe(30) für die Erstellung einer Sprechverbindung zwischen einem anrufenden Telephon (8) und dem Server (6) für die Adressierung von Kommunikationen folgt, und die einzelne kurze schriftliche Mitteilung oder die kurzen schriftlichen Mitteilungen Instruktionen für die Steuerung mindestens der Auslösung der Funktion der Mittel für die Benachrichtigung eines Benutzers enthält, die in jedem ausgewählten Telephonapparat enthalten sind, und dadurch, dass dieses Verfahren im Anschluss an die Etappe (32) der Aussendung von mindestens einer kurzen schriftlichen Nachricht folgendes enthält:
- eine Etappe (34) der Rückleitung eines Signals der Bereitschaft durch den ausgewählten Telephonapparat (4ᵢ) an den Server (6) für die Adressierung, wenn dieser Telephonapparat (4ᵢ) für eine Sprechverbindung bereit ist; und
- eine Etappe (40) für das Zusammenfügen der Sprechverbindungen zwischen dem anrufenden Telephon (8) über den Server (6) für die Adressierung mit dem ausgewählten Telephonapparat (4₁), um die Erstellung einer Sprechverbindung zwischen dem anrufenden Telephon (8) und dem ausgewählten Telephonapparat (4ᵢ) zu ermöglichen.

12. Verfahren nach Anspruch 11,
**dadurch gekennzeichnet, dass**
es außerdem eine Etappe (36, 38) für die Identifizierung eines Benutzers des ausgewählten Telephonapparates (4ᵢ) enthält, welche die Durchführung der Etappe (40) des Zusammenfügens der Sprechverbindung bedingt.

## Claims

1. System for addressing calls over a switched telephone network (2), said system comprising:
- at least one telephone device (4ᵢ) connected to said switched network (2), associated with means (10; 54) for communication by means of short text messages (SMS) and comprising means for alerting a user on the reception of a call; and
- a call addressing server (6) comprising automatic means (12) for transmitting short text messages to one or more selected telephone devices (4ᵢ) in a band of said switched telephone network (2) dedicated to voice calls,
which system is **characterised in that** said server (6) further comprises:
- means (14) for receiving voice calls from a calling telephone (8) over at least said switched telephone network (6);
- means (16) for generating at least one short text message containing command instructions and intended to be transmitted to the selected telephone device or to each selected telephone device in response to the reception of a voice call from said calling telephone (8); and
- means (18) for connecting through voice calls,
and **in that** it comprises, associated with the telephone device (4ᵢ) or with each telephone device (4ᵢ) :
- means (22ᵢ; 56) for controlling its operation adapted to be remote controlled by instructions contained in the command short text message, said instructions providing at least for triggering said means for alerting a user; and
- means (24ᵢ; 38) for transmitting an availability signal to said server (6) from said device (4ᵢ) if said device (4ᵢ) is available for a voice communication,
and **in that** said server (6) is adapted to connect through said voice call between a calling telephone (8) and said device (4ᵢ) via said connecting through means (18) of said server (6) for setting up a voice call following the reception of said availability signal.

2. System-according to claim 1, **characterised in that** it comprises a plurality (4) of telephone devices (4₁ to 4ₙ) connected to the same telephone line of said switched telephone network (2) and addressable by the same subscriber number, some or all of said telephone devices (4ᵢ) comprising means (22ᵢ) for controlling their operation adapted to be remote controlled and means (24ᵢ) for transmitting an availability signal.

3. System according to either claim 1 or claim 2, **characterised in that** it comprises a plurality (4) of telephone devices connected through a central unit (52) to the same telephone line of said switched telephone network (2) and addressable by the same subscriber number, said central unit (52) comprising said means (54) for communication by means of short text operation control means (56) adapted to be remote controlled and said means (58) for transmitting an availability signal.

4. System according to either claim 2 or claim 3, **characterised in that** said means (16) for generating command short text messages are adapted to identify automatically a telephone device (41) selected from said plurality (4) of devices or a group of devices selected from said plurality (4) of devices as a function of the subscriber number called by the calling telephone (8) and to send at least one short text message containing an identifier intended to be recognised by that telephone device (4ᵢ) or that group of devices.

5. System according to any one of claims 1 to 4, **characterised in that** it comprises a plurality of telephone devices connected to separate telephone lines of said switched telephone network (2) and addressable by separate subscriber numbers.

6. System according to any one of claims 1 to 5, **characterised in that** said server (6) further comprises at least one list (62) of telephone devices (4ᵢ) or groups of telephone devices and **in that** said means (18) for generating command short text messages are adapted to send a command message successively to each of said telephone devices or to said groups of telephone devices from the same list (6B) in the absence of an availability signal sent by the preceding telephone device or the preceding group of telephone devices in said list.

7. System according to any one of claims 1 to 6, **characterised in that** it further comprises means (20) for identifying the user of said selected telephone device (4ᵢ) or a selected telephone device (4ᵢ) and **in that** said means (18) for connecting through voice calls are adapted to be inhibited in the event of a negative identification.

8. System according to claim 7, **characterised in that** said means (20) for identifying a user are formed in said server (6).

9. System according to any one of claims 1 to 8, **characterised in that** said server (6) includes a voice server (14) forming a man-machine interface adapted to be used in the event of reception of voice calls by said server (6).

10. System according to any one of claims 1 to 9, **characterised in that** it further comprises a routing unit (60) adapted to identify an incoming call and to route that incoming call to said server (6).

11. Method of addressing calls over a switched telephone network (2), said method comprising a step (32) of sending at least one short text message via an addressing server (6) to a selected telephone device (4ᵢ) or to a selected group of telephone devices in a band of said switched telephone network dedicated to voice calls, and said method being **characterised in that** said step (32) of sending a short text message follows a step (30) of setting up a voice call between a calling telephone (8) and said addressing server (6), said short text message or said short text messages containing command instructions for commanding at least the triggering of means for alerting a user contained in the selected telephone device or each selected telephone device, and **in that** the method comprises, after said step (32) of sending at least one short text message :
- a step (34) in which said selected telephone device (4ᵢ) sends an availability signal to said addressing server (6) if said telephone device (4ᵢ) is available for a voice call; and
- a step (40) of connecting through the voice call between said calling telephone (8) and said selected telephone device (4ᵢ) via said addressing server (6) to allow the setting up of a voice call between said calling telephone (8) and said selected telephone device (4ᵢ).

12. Method according to claim 11, **characterised in that** it further comprises a step (36, 38) of identifying a user of said selected telephone device (4ᵢ) that conditions the execution of said step (40) of connecting through the voice call.
